# NOUVEAU FASCICULE DE BREVET EUROPEEN

(11) **EP 0 375 533 B2**
(45) Date de publication et mention de la décision concernant l'opposition: **14.10.1998**
(45) Mention de la délivrance du brevet: 03.03.1993
(21) Numéro de dépôt: 89403528.6
(22) Date de dépôt: 18.12.1989
(51) Int. Cl.: F17D 3/08

(54) **Vanne raclable à trois voies et conduite raclable de distribution de liquides la comportant**
Molchfähige Flüssigkeitsverteilungsleitung mit molchfähigem 3-Wege-Ventil
Pig pipe-line for fluid distribution comprising a 3-way valve

(30) Priorité: 20.12.1988 FR 8816846
(43) Date de publication de la demande: 27.06.1990
(73) Titulaire: FMC EUROPE S.A., F-89103 Sens Cédex (FR)
(72) Inventeur: Le Devehat, Eugène, F-89100 Saligny (FR)
(74) Mandataire: Rinuy, Santarelli

(56) Documents cités:
- WO-A-88/03246
- DE-A- 3 512 163
- US-A- 3 001 543
- US-A- 3 676 091
- Sonderdruck aus CHEMIE-TECHNIK 15 (1986), Heft 7, S. 43-45, Dr. Alfred Hüthig Verlag, Heidelberg

## Description

La présente invention concerne une vanne raclable à trois voies pour une conduite de distribution de liquides, par exemple de distribution d'huiles ou de produits pétroliers.

Lorsqu'une même conduite est utilisée pour la distribution successive de plusieurs liquides, il est connu, lorsqu'on veut changer de liquide après avoir arrêté en amont de cette conduite l'alimentation du premier liquide, et avant d'ouvrir, également en amont de cette conduite, l'alimentation du liquide suivant, de faire circuler dans cette conduite, d'amont en aval et réciproquement, un racleur "captif" adapté à balayer la paroi intérieure de cette conduite et à refouler vers l'aval les résidus du premier liquide qui adhèrent à cette paroi intérieure. On évite ainsi des pollutions ou contaminations entre les liquides qui se succèdent. Le racleur est "captif" lorsque celui-ci est destiné à effectuer plusieurs allers-retours dans la (ou les) conduite(s) sans pouvoir s'en échapper librement en régime normal.

Ceci est décrit notamment dans le document FR-2.222.587.

Les vannes à trois voies destinées à être montées dans de telles conduites de distribution de liquides doivent donc être adaptées à être traversées par un racleur, ce qui impose un certain nombre de contraintes géométriques sur ces vannes.

En pratique, les vannes à trois voies connues comportent un tronçon principal adapté à être traversé par un racleur, et un tronçon de dérivation raccordé à angle droit au tronçon principal en sorte de former un T.

Dans le document FR-2.222.587, les vannes raclables à trois voies utilisées dans la conduite de distribution de liquides comportent, pour l'obturation sélective du tronçon de dérivation, un coulisseau mobile le long du tronçon principal et adapté à obturer ou à dégager une fente annulaire ménagée dans la paroi interne du tronçon central.

Une telle solution se révèle toutefois présenter des inconvénients, notamment en ce que concerne l'impossibilité, pour le radeur, d'arracher les résidus engagés dans l'épaisseur radiale du logement de la fente annulaire précitée et auprès du coulisseau. Cette géométrie comporte des recoins et des culs de sac difficiles d'accès où les détritus s'accumulent sans pouvoir être vraiment lavés par le fluide. En fait les vannes raclables à trois voies présentent généralement des zones mortes et/ou provoquent à la jonction des tronçons principal et de dérivation de fortes turbulences générant des pertes de charge importantes. Enfin, il n'est pas possible de faire parvenir si nécessaire un racleur dans le tronçon de dérivation jusqu'à proximité immédiate du tronçon principal.

Par ailleurs, dans les conduites connues de distribution de liquides, des vannes très différentes sont prévues, d'une part en amont pour le stockage des racleurs en dehors de leur phase de raclage, ainsi que plus en aval pour les dérivations prévues dans la conduite pour l'arrivée ou la sortie de liquide.

On connait par ailleurs, par un usage antérieur, une vanne d'échantillonage ou de dosage comportant un boisseau sphérique affleurant au moins approximativement le volume interne du tronçon principal.

L'invention a pour objet de pallier les inconvénients précités, en proposant notamment une vanne à trois voies adaptée à ne permettre le dépôt que d'une très faible quantité de résidus non raclables tout en ne générant que de très faibles pertes de charge.

A titre complémentaire, l'invention propose une vanne à trois voies adaptée à être utilisée, aussi bien comme vanne à la fois d'alimentation et de stockage et de lancement de racleurs que, sous réserve d'aménagement aisément apportés, comme vanne à trois voies effectives constituant une dérivation dans la conduite de distribution de liquides.

L'invention propose à cet effet une vanne raclable à trois voies pour une conduite raclable de distribution de liquides, comportant un tronçon principal adapté à être raccordé à cette conduite de distribution, et un tronçon de dérivation adapté à être connecté à une canalisation d'entrée/sortie, communiquant avec le tronçon principal par une ouverture ménagée dans la paroi de ce tronçon principal, et un élément mobile d'obturation adapté à obturer ou non cette ouverture, caractérisé en ce que cette ouverture est entièrement contenue dans le prolongement du volume interne du tronçon de dérivation en ce que l'ouverture de cette vanne a une forme approximativement rectangulaire aux coins arrondis, et en ce que l'élément d'obturation, situé entre le tronçon de dérivation et cette ouverture, comporte un boisseau sphérique traversé par un alésage cylindrique et adapté à tourner sur au moins 90° autour d'un axe Z-Z transversal à l'axe Y-Y du tronçon de dérivation, entre une configuration de passage dans laquelle l'alésage est aligné avec ce tronçon de dérivation, et une configuration d'obturation dans laquelle ledit alésage est transversal à ce tronçon de dérivation tandis que le boisseau sphérique affleure au moins approximativement par sa paroi extérieure sphérique le volume interne du tronçon principal.

Selon des dispositions préférées de l'invention :
- la plus grande dimension de cette ouverture appelée longueur, est parallèle au tronçon principal tandis que l'autre dimension, appelée largeur, est transversale aux tronçons ;
- le rapport longueur/largeur de cette ouverture vaut environ entre 1,30 et 1,40, cette longueur valant entre 80 et 95 % du diamètre interne du tronçon principal ;
- l'alésage cylindnque a un diamètre interne égal à celui du tronçon de dérivation, lequel est égal à celui du tronçon principal ;
- l'axe transversal du boisseau sphérique est perpendiculaire aux axes du tronçon principal et du tronçon de dérivation ;
- la vanne comporte un élément d'arrêt escamotable adapté, au choix, pénétrer dans le volume interne du tronçon principal, approximativement dans le prolongement du tronçon de dérivation en sorte de pouvoir bloquer un racleur, ou au contraire, à s'effacer hors de ce volume interne en sorte de pouvoir être franchi par un tel racleur;
- cet élément d'arrêt escamotable est adapté à pénétrer dans le volume interne du tronçon principal dans un plan transversal à ce tronçon principal et contenant l'axe du tronçon de dérivation ;
- cet élément d'arrêt escamotable est constitué par un doigt adapté à pénétrer ou se rétracter radialement dans le volume interne du tronçon principal ;
- ce doigt est adapté à traverser diamétralement de part en part ce volume interne, jusqu'à pénétrer dans un trou borgne ménagé dans la paroi du tronçon principal ;
- ce doigt est constitué par la tige d'un vérin double effet;
- ce doigt est mobile transversalement aux axes du tronçon principal et du tronçon de dérivation ;
- ledit axe transversal du boisseau sphérique est parallèle à l'axe du tronçon principal ;
- un orifice d'injection de fluide sous pression est prévu au travers de la paroi du tronçon principal ;
- une bride d'obturation est fixée à l'une des extrémités du tronçon principal, cette bride d'obturation comportant une cuvette adaptée à recevoir pour butée un racleur en sorte que celui-ci soit disposé entre l'ouverture et ladite bride d'obturation, un orifice d'injection de fluide sous pression étant prévu au travers de cette bride d'obturation.

L'invention propose également une conduite de distribution de liquides, adaptée à être parcourue par un racleur et comportant une vanne d'arrivée à trois voies adaptée à être connectée à une canalisation d'alimentation et au moins deux vannes de dérivation à trois voies adaptées à être connectées à des canalisations de dérivation, cette vanne d'arrivée et une partie au moins de ces vannes de dérivation, sauf au plus celle disposée la plus en aval, comportant un élément d'arrêt escamotable et la vanne d'arrivée comportant une bride d'obturation munie d'un orifice d'injection de fluide sous pression et comportant une cuvette adaptée à recevoir en butée un racleur.

Des objets, caractéristiques et avantages de l'invention ressortent de la description qui suif donnée à titre d'exemple non limitatif, en regard des dessins annexés sur lesquels :
- la figure 1 est une vue en coupe axiale d'une vanne à trois voies conforme à l'invention, équipée d'une bride d'obturation, utilisable comme vanne d'alimentation, de stockage et de lancement de racleur ;
- la figure 2 en est, en configuration fermée, une vue en coupe transversale, dans un plan transversal à l'axe du tronçon principal et contenant l'axe du tronçon de dérivation ;
- la figure 3 en est une vue en coupe selon les lignes III-III des figures 1 et 2;
- la figure 4 est une vue en coupe axiale d'une autre vanne à trois voies conforme à l'invention, équipée d'un élément d'arrêt, utilisable comme vanne de dérivation;
- la figure 5 en est une vue en coupe axiale analogue à celle de la figure 2;
- la figure 6, est une vue schématique, représentée en configuration de repos, d'une conduite de distribution de liquides permettant, à partir d'une même canalisation d'alimentation, de distribuer des liquides dans plusieurs réservoirs distincts ;
- la figure 7, est une vue similaire de cette conduite au début de l'injection d'un liquide dans la conduite ;
- la figure 8, est une vue similaire de cette même conduite dans laquelle le liquide est distribué vers l'un prédéterminé des réservoirs ;
- la figure 9, est une vue de cette conduite en fin d'injection de liquide ; et
- la figure 10, est une vue de cette conduite, vers la fin de l'opération de raclage.

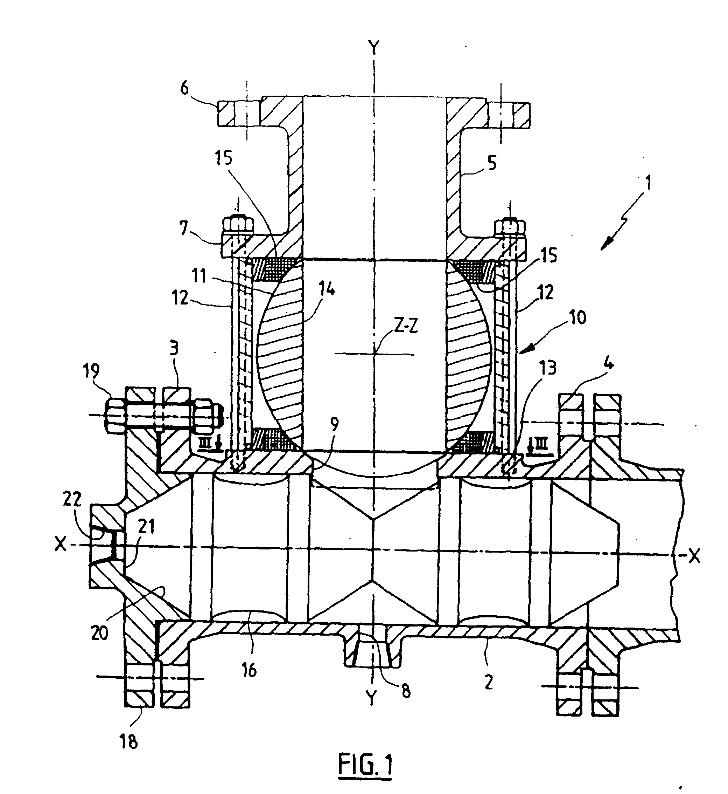

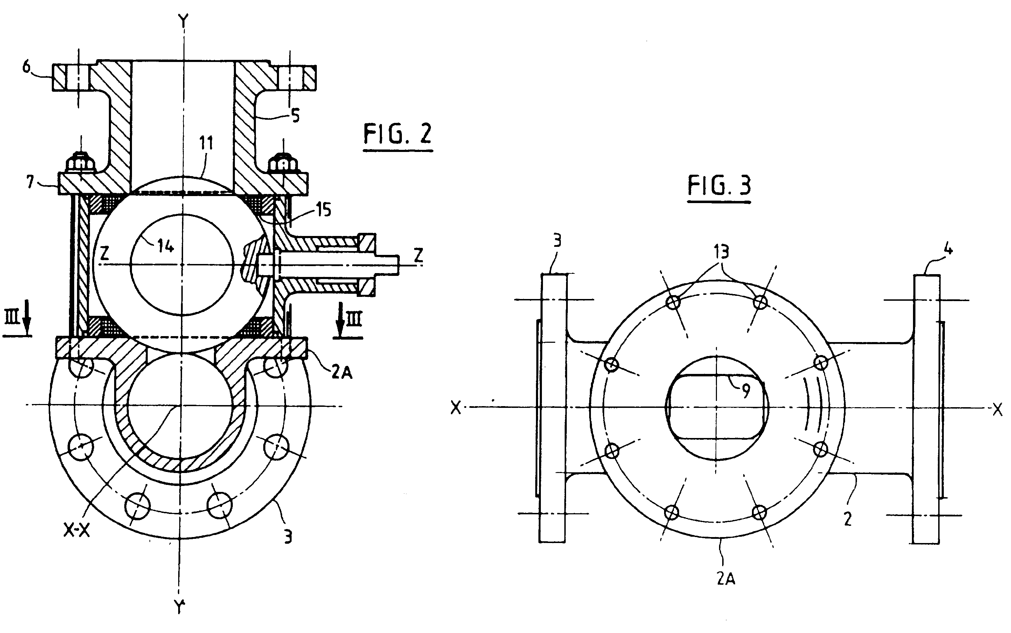

La vanne à trois voies désignée en 1 sur les figures 1 et 2, comporte un tronçon tubulaire principal 2, muni à ses extrémités de deux brides transversales 3 et 4, ainsi qu'un tronçon tubulaire de dérivation 5, muni de brides de raccordement 6 et 7, et se raccordant à angle droit à ce tronçon principal 2. Ces tronçons 2 et 5 ont ici la même section interne.

Dans la paroi intérieure du tronçon principal 2 est ménagé, ici sensiblement à mi-longueur, un orifice 8 adapté à être connecté à une source d'air comprimé (ou tout autre fluide sous pression approprié), ainsi que, dans une bride plane longitudinale 2A longeant cette paroi, une ouverture 9 destinée à faire communiquer l'intérieur du tronçon principal 2 avec l'intérieur du tronçon de dérivation 5.

Cette ouverture 9 est entièrement contenue dans le prolongement du volume interne du tronçon de dérivation 5 ; sa paroi latérale est donc de faible surface, ce qui ne permet l'adhérence que d'une faible quantité de résidus de liquide.

Cette ouverture 9 est représentée vue de dessus à la figure 3. Elle a une forme approximativement rectangulaire, aux coins arrondis, dont la plus grande dimension est de manière préférée, alignée selon l'axe X-X du tronçon principal. A titre d'exemple, le rapport longueur/largeur vaut environ 1,35 (entre 1,30 et 1,40) tandis que cette longueur vaut approximativement 90 % (entre 80 et 95 %) du diamètre interne du tronçon principal.

La section de passage de cette ouverture 9 est de préférence au moins égale à 2/3 de la section nominale du tronçon de dérivation, avantageusement voisine de 66 ou de 75 %.

Entre le tronçon principal 2 et le tronçon de dérivation 5, est disposé un élément d'obturation 10 à boisseau sphérique 11. Cet élément d'obturation 10 est ici fixé au sein de la vanne à trois voies 1 grâce à des vis à longue tige 12 traversant des orifices de la bride 7 du tronçon de dérivation 5 et pénétrant dans des alésages 13 ménagés dans la bride plane longitudinale du tronçon principal 2.

Ainsi que cela ressort particulièrement bien dans la figure 2, le boisseau sphérique Il de l'élément d'obturation 10 est adapté à tourner, au moins sur un angle de 90°, autour d'un axe Z-Z perpendiculaire à l'axe Y-Y du tronçon de dérivation.

De la sorte, ce boisseau sphérique 11, dans lequel est ménagé un alésage cylindrique 14 de même section interne que le tronçon de dérivation 5, admet une position de passage dans laquelle l'alésage cylindrique 14 est aligné avec le tronçon de dérivation 5 et en permet la communication avec l'intérieur du tronçon principal 2 au travers de l'orifice 9, et une position d'obturation dans lequel l'alésage cylindrique 14 vient à angle droit par rapport à l'axe Y-Y, en conséquence de quoi tout écoulement entre le tronçon de dérivation 5 et le tronçon principal 2 est empêché.

Des garnitures d'étanchéité 15 sont prévues pour éviter des fuites à la périphérie du boisseau sphérique.

On peut noter que le volume balayé par le boisseau sphérique, lors de ses mouvements de rotation, affleure sensiblement le prolongement de la surface interne du tronçon principal de sorte que, en position d'obturation, ce boisseau sphérique occupe la quasi totalité du volume de l'orifice de passage 9 sans pour autant gêner le passage d'un éventuel racleur 16.

De la sorte, la seule surface susceptible d'être encrassée par des résidus de liquides, sans pouvoir être radée, se trouve être la paroi étroite bordant l'ouverture d'écoulement 9. On appréciera que le tronçon de dérivation 5 ainsi que l'alésage 4 du boisseau sphérique peuvent être raclés, si besoin.

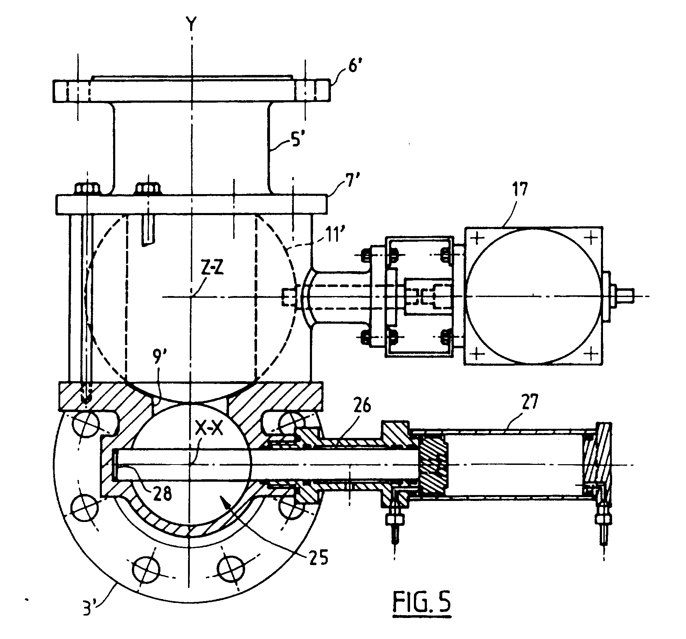

L'élément d'obturation 10 à boisseau sphérique Il est associé, à la figure 2, à un élément de commande non représenté (repéré 17 à la figure 5) de type pneumatique, de tout type connu approprié. Dans l'exemple représenté, l'axe de rotation du boisseau sphérique est à la fois transversal à l'axe Y-Y du tronçon de dérivation et à l'axe X-X du tronçon principal.

Dans le montage des figures 1 et 2, la vanne 1 à boisseau sphérique est obturée à l'une des extrémités de son tronçon principal par une bride 18 assujettie par des moyens de fixation 19 (ici des boulons) à la bride 3 tandis qu'à la bride 4 est raccordée une bride ménagée à l'extrémité d'une conduite. Cette bride d'obturation 18 présente une cuvette 20, ici de forme tronconique, destinée à recevoir pour butée un racleur 16, de forme terminale ici également tronconique, et dont le fond 21 est traversé par un orifice 22 adapté à être connecté à une source de pression (par exemple) d'air comprimé, non représentée, par exemple la même que celle connectée à l'orifice 8.

Dans l'exemple de la figure 1, l'axe Y-Y et la bride d'obturation 18 sont décalés axialement, selon l'axe X-X, d'une distance telle que l'extrémité avant du racleur 16 longe cet axe Y-Y, ce qui permet l'écoulement de liquide tout en évitant que le racleur puisse être entraîné par un écoulement ayant lieu depuis le tronçon de dérivation 5 vers l'extrémité dégagée du tronçon principal 2.

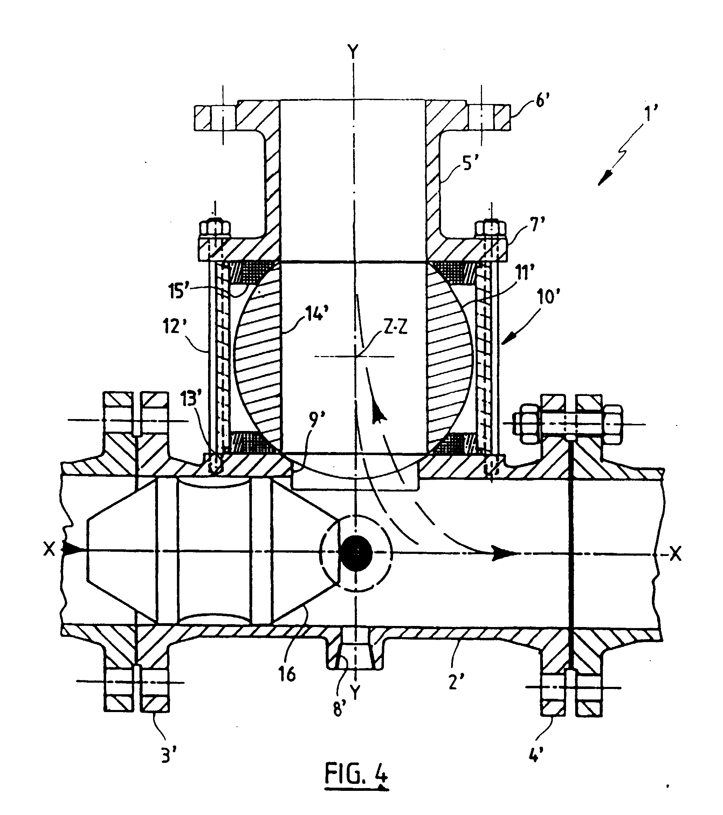

Les figures 4 et 5 représentent une autre vanne à trois voies désignée par la référence 1' et dont les éléments similaires à ceux des figures 1 à 3 sont affectés des mêmes signes de référence avec toutefois juxtaposition de l'indice "prime".

Cette vanne 1' comporte, comme la vanne 1 des figures 1 et 2, un tronçon principal 2' muni de brides 3' et 4', un tronçon de dérivation 5', muni de brides 6' et 7', et un élément d'obturation 10' à boisseau sphérique 11'. Les brides 3' et 4' sont raccordées aux brides d'autres tronçons de conduite.

Dans la paroi du tronçon principal 2' est prévu, ici encore, un orifice 8' d'injection d'air comprimé, (non nécessaire), ainsi qu'un orifice de passage 9'.

Dans cet exemple des figures 4 et 5, il est en outre prévu un élément d'arrêt escamotable 25, ici constitué par un doigt 26 adapté à pénétrer radialement dans le tronçon principal 2', sensiblement à la croisée des axes X-X et Y-Y, destiné à permettre, le cas échéant, le blocage en butée, dans un sens ou dans l'autre, du racleur 16. Plus précisément ce doigt est adapté à traverser de part en part le volume interne du tronçon principal jusqu'à pénétrer dans un trou borgne 28 qui en favorise son ancrage en position.

Le doigt 26 constitutif de l'élément escamotable d'arrêt 25 est ici radialement escamotable. Il s'agit de la tige d'un vérin double effet 27, hydraulique ou pneumatique, adapté à être connecté à une source de puissance appropriée.

On appréciera que les vannes 1 et 1' sont très peu différentes, puisqu'elles ne différent que par la présence de l'élément d'arrêt 25. En pratique, selon une variante préférée non représentée de la vanne 1, des trous borgnes diamétralement opposés sont ménagés dans un plan transversal à X-X et contenant l'axe Y-Y ; il suffit alors de percer l'un de ces trous borgnes pour mettre en place un élément d'arrêt pour convertir la vanne du type de la vanne 1 en une vanne du type de la vanne 1'. Il en résulte une réduction de coût de fabrication puisque les vannes 1 et 1' ont des processus de fabrication très semblables ; en outre si l'on utilise cette variante de la vanne 1, on simplifie le stockage sous réserve que le montage de l'élément d'arrêt se fasse au moment de son intégration dans une conduite, puisque au préalable les vannes 1'sont identiques aux vannes 1 modifiées selon cette variante préférée.

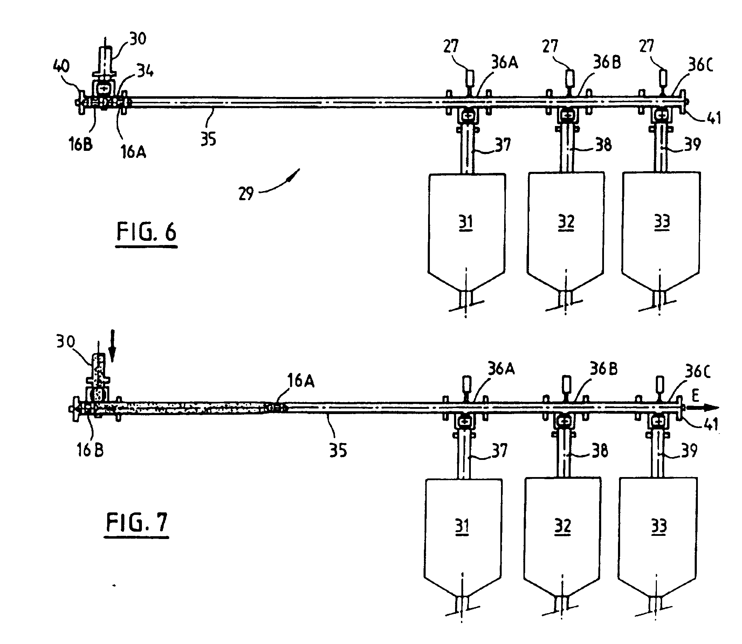

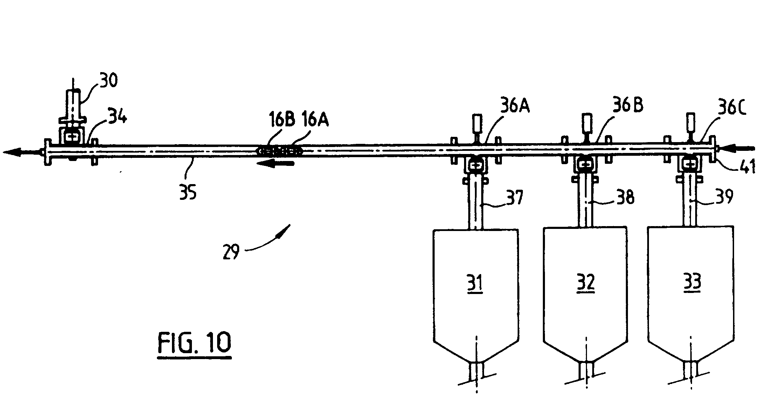

Une application de la vanne des figures 1 à 5 est représentée aux figures 6 à 10 qui illustrent cinq phases dans le fonctionnement d'une conduite de distribution de liquides 29 depuis une canalisation d'alimentation 30 jusqu'à l'un, sélectionné, de plusieurs réservoirs 31, 32, 33. La conduite 29 comporte une vanne à trois voies d'arrivée ou d'alimentation 34 à laquelle aboutit la canalisation d'alimentation 30 et d'où part une canalisation commune 35. Trois vannes de dérivation 36 (36A, 36B et 36C) sont prévues à l'extrémité aval de la canalisation 35, à l'opposé de la vanne d'arrivée 34.

Chacune des vannes de dérivation 36 communique par une canalisation de dérivation 37, 38, ou 39 avec l'un des réservoirs 31 à 33.

Le raclage de cette conduite 29 fait intervenir, dans l'exemple considéré, deux racleurs 16A et 16B.

Selon un avantage de l'invention, les vannes 34 et 36 sont sensiblement identiques et ne différent guère que par leur mode de montage dans la conduite 29. Une seule exigence concernant les vannes 36 étant qu'elles soient du type précité, à l'élément d'arrêt escamotable, exigence qu'on ne retrouve pas à propos de la vanne 34.

A titre préféré, les vannes 34 et 36 sont respectivement identiques aux vannes 1 et 1', les éléments 27 étant ici uniquement pour des raisons de lisibilité des dessins, représentés dans le prolongement des tronçons 37, 38 et 39. En variante non représentée, la vanne 34 est du type de la vanne 1' sans que l'on utilise l'élément d'arrêt.

Dans la configuration de repos de la figure 6, les quatre vannes 34 et 36 sont fermées, les deux racleurs 6A et 16B sont positionnés dans la vanne 34 (voir aussi la figure 1), en butée l'un contre l'autre, et contre la bride d'obturation 40 (assimilable à la bride 18 de la figure 1) qui obture le tronçon principal de cette vanne 34 à l'opposé de la canalisation 35. Une bride d'obturation du même type 41 est prévue à l'autre bout de la conduite 29, ici fixée à l'une des brides de la vanne de dérivation 36C située le plus en aval de cette conduite 29.

Après mise en communication de la canalisation d'alimentation 30 avec une première source de liquide, on ouvre la vanne d'arrivée 34 et, ainsi que cela apparaît à la figure 7, le premier racleur 16A est ainsi propulsé vers la droite parle liquide lui-même. De manière à ne pas entraver la progression du racleur 16A, une mise à l'atmosphère de la conduite 29 est assurée en E au travers de la bride d'obturation 41, par un orifice assimilable à l'orifice 22 de la figure 1.

Cette progression du radeur s'effectue au delà de la vanne 36B associée au réservoir, ici le réservoir 32, dans lequel on veut injecter le liquide.

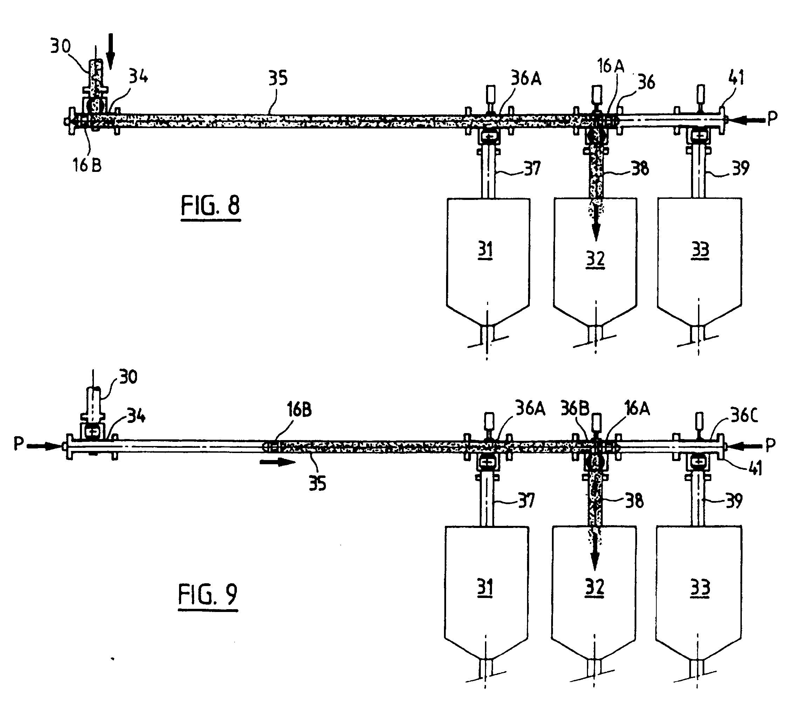

On procède ainsi, par injection d'air comprimé au travers de la bride 41, à une mise sous pression P de la conduite à droite du racleur 16A lequel, après que le dispositif d'arrêt escamotable de la vanne 36 considérée ait été déployé, est ainsi maintenu en butée contre cet élément d'arrêt escamotable, ce qui, après que la vanne 36B ait été ouverte, force la dérivation du liquide vers le tronçon 38 aboutissant au réservoir 32 (figure 8).

Lorsque la quantité voulue de liquide a été fournie à la conduite 29, on ferme la vanne 34 et on applique une pression P d'air comprimé au travers de la bnde 40 associée à la vanne d'arrivée 34, grace à quoi le reliquat du liquide est refoulé dans le réservoir 32 par ce second racleur 16B (figure 9).

Lorsque tout le liquide a été refoulé dans le réservoir voulu, les deux racleurs 16A et 16B étant quasiment en contact de part et d'autre du dispositif d'arrêt escamotable, on ferme la vanne 36B et on rétracte ce dernier et, par injection à nouveau d'une pression d'air comprimé au travers de la bride d'obturation 41, on refoule ensemble les racleurs 16A et 16B vers la vanne d'arrivée 34, pour revenir ainsi à la configuration de la figure 6.

En variante non représentée, la vanne 36C la plus en aval, raccordée au tronçon 39, peut être du type de cette figure 1, sans dispositif d'arrêt escamotable.

## Revendications

1. Vanne à trois voies pour une conduite raclable de distribution de liquides (29), comportant un tronçon principal (2, 2') adapté à être raccordé à cette conduite de distribution, et un tronçon de dérivation (5, 5') adapté à être connecté à une canalisation d'entrée/sortie (30, 37, 38, 39), communiquant avec le tronçon principal par une ouverture (9, 9') ménagée dans la paroi de ce tronçon principal, et un élément mobile d'obturation (10, 10') adapté à obturer ou non cette ouverture, caractérisé en ce que cette ouverture (9, 9') est entièrement contenue dans le prolongement du volume interne du tronçon de dérivation (5, 5') en ce que cette ouverture (9, 9') a une forme approximativement rectangulaire aux coins arrondis et en ce que l'élément d'obturation (10,10'), situé entre le tronçon de dérivation (5, 5') et cette ouverture, comporte un boisseau sphérique (11,11'), traversé par un alésage cylindrique (14, 14') et adapté à tourner sur au moins 90° autour d'un axe (Z-Z) transversal avec l'axe (Y-Y) du tronçon de dérivation, entre une configuration de passage dans laquelle l'alésage est aligné avec ce tronçon de dérivation, et une configuration d'obturation dans laquelle ledit alésage est transversal à ce tronçon de dérivation tandis que le boisseau sphérique affleure au moins approximativement par sa paroi extérieure sphérique le volume interne du tronçon principal.

2. Vanne selon la revendication 1, caractérisée en ce que la plus grande dimension de l'ouverture (9,9'), appelée longueur, est parallèle au tronçon principal tandis que l'autre dimension, appelée largeur est transversale aux tronçons (2, 2'; 5, 5').

3. Vanne selon la revendication 2, caractérisée en ce que le rapport longueur/largeur de cette ouverture vaut environ entre 1,30 et 1,40, cette longueur valant entre 80 et 95 % du diamètre interne du tronçon principal.

4. Vanne selon les revendications 1 à 3, caractérisée en ce que l'alésage cylindrique (14,14') a un diamètre interne égal à celui du tronçon de dérivation (5, 5'), lequel est égal à celui du tronçon principal.

5. Vanne selon l'une quelconque des revendications 1 à 4, caractérisée en ce que ledit axe transversal du boisseau sphérique est perpendiculaire aux axes du tronçon principal (2, 2') et du tronçon de dérivation (5, 5').

6. Vanne selon l'une quelconque des revendications 1 à 5, caractérisée en ce qu'elle comporte un élément d'arrêt escamotable (25) adapté, au choix, à pénétrer dans le volume interne du tronçon principal, approximativement dans le prolongement du tronçon de dérivation (2) en sorte de pouvoir bloquer un radeur (16), ou au contraire, à s'effacer hors de ce volume interne en sorte de pouvoir être franchi par un tel racleur.

7. Vanne selon la revendication 6, caractérisé en ce que cet élément d'arrêt escamotable (25) est adapté à pénétrer dans le volume interne du tronçon principal dans un plan transversal à ce tronçon principal et contenant l'axe du tronçon de dérivation.

8. Vanne selon la revendication 6 ou la revendication 7, caractérisée en ce que cet élément d'arrêt escamotable est constitué par un doigt (26) adapté à pénétrer ou se rétracter radialement dans le volume interne du tronçon principal.

9. Vanne selon la revendication 8, caractérisée en ce que ce doigt (26) est adapté à traverser diamétralement de part en part ce volume interne, jusqu'à pénétrer dans un trou borgne (28) ménagé dans la paroi du tronçon principal.

10. Vanne selon la revendication 8 ou la revendication 9, caractérisée en ce que ce doigt est constitué par la tige d'un vérin double effet (27).

11. Vanne selon l'une quelconque des revendications 8 à 10, caractérisée en ce que ce doigt est mobile transversalement aux axes du tronçon principal et du tronçon de dérivation.

12. Vanne selon l'une quelconque des revendications 1 à 11, caractérisée en ce qu'un orifice (8, 8') d'injection de fluide sous pression est prévu au travers de la paroi du tronçon principal.

13. Vanne selon l'une quelconque des revendications 1 à 12, caractérisée en ce qu'une bride d'obturation (18,18') est fixée à l'une des extrémités du tronçon principal, cette bride d'obturation comportant une cuvette (21) adaptée à recevoir pour butée un racleur en sorte que celui-ci soit disposé entre l'ouverture et ladite bride d'obturation, un orifice (22, 22') d'injection de fluide sous pression étant prévu au travers de cette bride d'obturation.

14. Conduite (29) de distribution de liquides, adaptée à être parcourue par un racleur (16, 16A, 16B) et comportant une vanne d'arrivée à trois voies (34) adaptée à être connectée à une canalisation d'alimentation (30) et au moins deux vannes de dérivation à trois voies (36) adaptées à être connectées à des canalisations de dérivation (37, 38, 39), cette vanne d'arrivée et une partie au moins de ces vannes de dérivation (36) étant conformes à l'une quelconque des revendications 1 à 12, au moins ces vannes de dérivation sauf au plus celle (36C) disposée la plus en aval comportant un élément d'arrêt escamotable (25) et la vanne d'arrivée comportant une bride d'obturation (18, 18') munie d'un orifice (22, 22') d'injection de fluide sous pression et comportant une cuvette (21) adaptée à recevoir en butée un racleur (16).

15. Conduite selon la revendication 14, caractérisée en ce que la vanne de dérivation située la plus en aval (36C) comporte sur son extrémité aval une bride d'obturation munie d'un orifice d'injection de fluide sous pression et comportant une cuvette adaptée à recevoir en butée un racleur.

## Patentansprüche

1. Dreiwegeventil für eine auswischbare Flüssigkeitsverteilungsleitung (29), umfassend einen mit der Verteilungsleitung verbindbaren Hauptabschnitt (2,2') und einen an eine Eingangs/Ausgangsleitung (30,37,38,39) anschließbaren Abzweigungsabschnitt (5,5'), welcher mit dem Hauptabschnitt über eine in der Wand des Hauptabschnitts angebrachte Einmündung (9,9') in Verbindung steht, und ein zum Verschliessen oder Offenlassen der Einmündung ausgebildetes bewegliches Verschlußelement (10,10'),
**dadurch gekennzeichnet**, daß die Einmündung (9,9') vollständig innerhalb der Verlängerung des Innenvolumens des Abzweigungsabschnitts (5,5') enthalten ist, daß die Einmündung (9,9') eine annähernd rechteckige Form mit abgerundeten Ecken aufweist und daß das zwischen dem Abzweigungsabschnitt (5,5') und der Einmündung gelegene Verschlußelement (10,10') einen kugelförmigen Hahn (11,11') umfaßt, durch den sich eine zylindrische Bohrung (14,14') hindurcherstreckt, und der um wenigstens 90° um eine zur Achse (Y-Y) des Abzweigungsabschnitts transversale Achse (Z-Z) drehbar ist, zwischen einer Durchlaßstellung, in welcher die Bohrung zum Abzweigungsabschnitt ausgerichtet ist und einer Schließanordnung, in welcher die Bohrung transversal zu diesem Abzweigungsabschnitt verläuft, wobei die kugelförmige Außenwand des kugelförmigen Hahns wenigstens annähernd mit dem Innenvolumen des Hauptabschnitts fluchtet.

2. Ventil nach Anspruch 1, **dadurch gekennzeichnet**, daß die größte, als Länge bezeichnete Ausdehnung der Einmündung (9,9') parallel zum Hauptabschnitt verläuft, und daß die andere, als Breite bezeichnete Ausdehnung zu den Abschnitten (2,2';5,5') transversal ist.

3. Ventil nach Anspruch 2, **dadurch gekennzeichnet**, daß das Verhältnis Länge/Breite der Einmündung ungefähr zwischen 1,30 und 1,40 liegt, wobei die Länge zwischen 80 und 95 % des Innendurchmessers des Hauptabschnitts beträgt.

4. Ventil nach den Ansprüchen 1 bis 3, **dadurch gekennzeichnet,** daß die zylindrische Bohrung (14,14') einen Innendurchmesser aufweist, welcher gleich dem Innendurchmesser des Abzweigungsabschnitts (5,5') ist, der gleich dem Innendurchmesser des Hauptabschnitts ist.

5. Ventil nach einem der Ansprüche 1 bis 4, **dadurch gekennzeichnet**, daß die Transversalachse des kugelförmigen Hahns orthogonal zu den Achsen des Hauptabschnitts (2,2') und des Abzweigungsabschnitts (5,5') ist.

6. Ventil nach einem der Ansprüche 1 bis 5, **dadurch gekennzeichnet**, daß es ein einziehbares Sperrelement (25) umfaßt, welches dazu geeignet ist, wahlweise in das Innenvolumen des Hauptabschnitts einzudringen, annähernd in die Verlängerung des Abzweigungsabschnitts (2), so daß ein Wischer (16) blockierbar ist, oder im Gegensatz dazu geeignet ist, sich aus diesem Innenvolumen zurückzubewegen, so daß das Sperrelement von einem solchen Wischer passiert werden kann.

7. Ventil nach Anspruch 6, **dadurch gekennzeichnet**, daß das einziehbare Sperrelement (25) dazu geeignet ist, in einer Ebene, die zu dem Hauptabschnitt transversal ist und die Achse des Abzweigungsabschnitts enthält, in das Innenvolumen des Hauptabschnitts einzudringen.

8. Ventil nach Anspruch 6 oder 7, **dadurch gekennzeichnet**, daß das einziehbare Sperrelement durch einen Finger (26) gebildet ist, der dazu geeignet ist, in das Innenvolumen des Hauptabschnitts radial einzudringen oder sich daraus radial zurückzuziehen.

9. Ventil nach Anspruch 8, **dadurch gekennzeichnet**, daß der Finger (26) dazu geeignet ist, das Innenvolumen entlang des Durchmessers vollständig zu durchqueren, bis er in ein in der Wand des Hauptabschnitts angeordnetes Sackloch (28) eindringt.

10. Ventil nach Anspruch 8 oder 9, **dadurch gekennzeichnet**, daß der Finger durch die Stange eines doppelwirkenden Zylinders (27) gebildet ist.

11. Ventil nach einem der Ansprüche 8 bis 10, **dadurch gekennzeichnet**, daß der Finger quer zu den Achsen des Hauptabschnitts und des Abzweigungsabschnitts bewegbar ist.

12. Ventil nach einem der Ansprüche 1 bis 11, **dadurch gekennzeichnet**, daß eine Öffnung (8,8') zum Einführen von Fluid unter Druck durch die Wand des Hauptabschnitts hindurch vorgesehen ist.

13. Ventil nach einem der Ansprüche 1 bis 12, **dadurch gekennzeichnet**, daß ein Abschlußflansch (18,18') an einem der Enden des Hauptabschnitts befestigt ist, wobei der Abschlußflansch eine Vertiefung (21) umfaßt, welche dazu geeignet ist, einen Wischer in Anlage derart aufzunehmen, daß dieser Wischer zwischen der Einmündung und dem Abschlußflansch liegt, wobei durch den Abschlußflansch hindurch eine Öffnung (22,22') zum Einführen von Fluid unter Druck vorgesehen ist.

14. Flüssigkeitsverteilungsleitung (29), welche dazu geeignet ist, von einem Wischer (16,16A,16B) durchlaufen zu werden und welche ein an eine Versorgungsleitung (30) anschließbares Eingangs-Dreiwegeventil (34) umfaßt sowie wenigstens zwei an Abzweigungsleitungen (37,38,39) anschließbare Abzweigungs- Dreiwegeventile (36) umfaßt, wobei das Eingangsventil und zumindest ein Teil der Abzweigungsventile einem der Ansprüche 1 bis 12 entsprechen, und wobei zumindest die Abzweigungsventile außer höchstens dem am weitesten stromabwärts gelegenen (36C) ein einziehbares Sperrelement (25) umfassen, und wobei das Eingangsventil einen Abschlußflansch (18,18') mit einer Öffnung (22,22') zum Einführen von Fluid unter Druck umfaßt und eine Vertiefung (21) umfaßt, die einen Wischer (16) in Anlage aufnehmen kann.

15. Leitung nach Anspruch 14, **dadurch gekennzeichnet**, daß das am weitesten stromabwärts gelegene Abzweigungsventil (36C) an seinem stromabwärtigen Ende einen Abschlußflansch mit einer Öffnung zum Einführen von Fluid unter Druck umfaßt und eine Vertiefung umfaßt, die einen Wischer in Anlage aufnehmen kann.

## Claims

1. Three-way valve for a scrapable liquid distribution pipeline (29) having a main section (2, 2') adapted to be connected to this distribution pipeline, and a branch section (5, 5') adapted to be connected to an inlet/outlet pipe (30, 37, 38, 39) communicating with the main section through an opening (9, 9') formed in the wall of the main section and a movable obturator member (10, 10') adapted to shut off, or not, the said opening, characterised in that this opening (9, 9') is entirely contained within the extension of the internal volume of the branch section (5, 5'), in that this opening (9, 9') is approximately rectangular in shape with rounded corners and in that the obturator member (10, 10'), situated between the branch section (5, 5') and the said opening, has a spherical plug (11, 11') through which a cylindrical bore (14, 14') passes and which is adapted to rotate through at least 90° about an axis (Z-Z) transverse to the axis (Y-Y) of the branch section, between an open configuration in which the bore is aligned with the said branch section and a closed configuration in which the said bore is transverse to the said branch section whilst the spherical external surface of the spherical plug is at least approximately flush with the internal volume of the main section.

2. Valve according to Claim 1, characterised in that the larger dimension of the opening (9, 9'), referred to as the length, is parallel to the main section whereas the other dimension, referred to as the width, is transverse to the sections (2, 2'; 5, 5').

3. Valve according to Claim 2, characterised in that the ratio of the length of the opening to its width is between 1.30 and 1.40, the length being between 80 and 95% of the inside diameter of the main section.

4. Valve according to Claims 1 to 3, characterised in that the cylindrical bore (14, 14') has an inside diameter equal to that of the branch section (5, 5') which is in turn equal to that of the main section.

5. Valve according to any one of Claims 1 to 4, characterised in that the said transverse axis of the spherical plug is perpendicular to the axes of the main section (2, 2') and branch section (5, 5').

6. Valve according to any one of Claims 1 to 5, characterised in that it has a retractable stop member (25) adapted, as desired, to enter the internal volume of the main section, approximately in line with the branch section (2) so as to be able to block a scraper (16) or on the contrary to be retracted from this internal volume so that a scraper can pass by it.

7. Valve according to Claim 6, characterised in that the retractable stop member (25) is adapted to enter the internal volume of the main section in a plane transverse to this main section and containing the axis of the branch section.

8. Valve according to Claim 6 or Claim 7, characterised in that the said retractable stop member consists of a finger (26) adapted to radially enter or be retracted from the internal volume of the main section.

9. Valve according to Claim 8, characterised in that the said finger (26) is adapted to pass diametrally across the internal volume and enter a blind hole (28) formed in the wall of the main section.

10. Valve according to Claim 8 or Claim 9, characterised in that the finger is the rod of a double-acting ram (27).

11. Valve according to any one of Claims 8 to 10, characterised in that the finger is movable transversely to the axes of the main section and branch section.

12. Valve according to any one of Claims 1 to 11, characterised in that an orifice (8, 8') for injecting fluid under pressure is provided through the wall of the main section.

13. Valve according to any one of Claims 1 to 12, characterised in that an obturator flange (18, 18') is fixed to one end of the main section, this obturator flange having a cup (21) adapted to receive in abutment a scraper so that the latter is disposed between the opening and said obturator flange, an orifice (22, 22') for injecting fluid under pressure being provided through the said obturator flange.

14. Liquid distribution pipeline (29) adapted to have a scraper (16, 16A, 16B) pass through it and having a three-way inlet valve (34) adapted to be connected to a supply pipe (30) and at least two three-way branch valves (36) adapted to be connected to branch pipes (37, 38, 39), the said inlet valve and some at least of the said branch valves (36) being in accordance with any one of Claims 1 to 12, some at least of the branch valves, with the exception of at most the one (36C) furthest downstream, having a retractable stop member (25) and the inlet valve having an obturator flange (18, 18') provided with an orifice (22, 22') for injecting fluid under pressure and having a cup (21) adapted to receive a scraper (16) in abutment.

15. Pipeline according to Claim 14, characterised in that the branch valve (36C) situated furthest downstream has at its downstream end an obturator flange provided with an orifice for injecting fluid under pressure and having a cup adapted to receive a scraper in abutment.
